# EUROPÄISCHE PATENTANMELDUNG

(11) **EP 4 775 020 A1**
(43) Veröffentlichungstag der Anmeldung: **15.07.2026**
(21) Anmeldenummer: 25216815.8
(22) Anmeldetag: 19.11.2025
(51) Int. Cl.: A01D 43/08

(54) **SELBSTFAHRENDE LANDWIRTSCHAFTLICHE ERNTEMASCHINE SOWIE VERFAHREN ZUM BETRIEB EINER SELBSTFAHRENDEN LANDWIRTSCHAFTLICHEN ERNTEMASCHINE**

(30) Priorität: 13.01.2025 DE 102025100962
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Bönig, Ingo, 33330 Gütersloh (DE); Brune, Markus, 33428 Harsewinkel (DE); Dirksen, Matthis, 48231 Warendorf (DE); Titkemeier, Daniel, 49080 Osnabrück (DE); Kildeby, Allan, 3060 Espergærde (DK); Lysgaard Andersen, Gert, 3450 Alleroed (DK)
(74) Vertreter: CLAAS Gruppe

(57) **Zusammenfassung**

Die vorliegende Anmeldung betrifft eine selbstfahrende landwirtschaftliche Erntemaschine (1), umfassend eine Pick-up (2) zum Aufnehmen von in Form eines Erntegutschwads (3) vorliegendem Erntegut, weitere Arbeitsaggregate (5, 6, 7, 8) zum Bearbeiten des Ernteguts, einem Antriebsmotor (9), einer Kameraeinrichtung (10) zur sukzessiven Erfassung digitaler Bilder des Erntegutschwads (3) an mindestens einer vor der Erntemaschine (1) befindlichen Erfassungsstelle (11), eine Geschwindigkeitsregelanlage (12) zur Regelung der Fahrgeschwindigkeit der Erntemaschine (1), eine Sensoreinrichtung (13) zur sukzessiven Erfassung eines Massenstroms des Ernteguts, der von den Arbeitsaggregaten (5, 6, 7, 8) während des Erntebetriebs zu bearbeiten ist, und eine Datenverarbeitungseinrichtung (14).

Um eine selbstfahrende landwirtschaftliche Erntemaschine bereitzustellen, die gegenüber dem Stand der Technik besser vor einer Überlastung der Arbeitsaggregate geschützt ist, wird vorgeschlagen, dass die Datenverarbeitungseinrichtung (14) dazu vorgesehen und eingerichtet ist, die von der Kameraeinrichtung (10) erfassten digitalen Bilder derart zu verarbeiten, dass an der Erfassungsstelle (11) ein Schwadquerschnitt des Erntegutschwads (3) bestimmt wird, von der Geschwindigkeitsregelanlage (12) die aktuelle Fahrgeschwindigkeit zu empfangen und aus dieser Fahrgeschwindigkeit und dem Schwadquerschnitt einen Volumenstrom des Ernteguts zu schätzen, basierend auf dem geschätzten Volumenstrom mittels Anwendung eines Umrechnungsfaktors einen Massenstrom des Ernteguts zu prognostizieren, der zeitversetzt nach der Erfassung des Schwadquerschnitts von den Arbeitsaggregaten (5, 6, 7, 8) zu bearbeiten ist, und die Geschwindigkeitsregelanlage (12) dahingehend anzusteuern, dass die Fahrgeschwindigkeit in Abhängigkeit von dem prognostizierten Massenstrom verändert wird.

## Beschreibung

Die vorliegende Anmeldung betrifft eine selbstfahrende landwirtschaftliche Erntemaschine gemäß dem Oberbegriff von Anspruch 1. Ferner betrifft die vorliegende Anmeldung ein Verfahren zum Betrieb einer selbstfahrenden landwirtschaftlichen Erntemaschine gemäß Anspruch 8.

Die selbstfahrende landwirtschaftliche Erntemaschine kann beispielsweise und vorzugsweise von einem selbstfahrenden Feldhäcksler gebildet sein. Ein solcher umfasst verschiedene Arbeitsaggregate, die dazu vorgesehen und eingerichtet sind, Erntegut von einem Feld aufzunehmen und zu verarbeiten. Beispielsweise bei der Grasernte ist der Feldhäcksler bevorzugt an seinem vorderen Ende mit einer Pick-up ausgestattet, die dazu vorgesehen und eingerichtet ist, auf dem jeweiligen Feld aufliegendes Erntegut aufzunehmen. Hierbei liegt das Erntegut typischerweise in Form eines Erntegutschwads vor, der linienförmig auf dem Feld aufliegt. Zur Aufnahme des Ernteguts fährt der Feldhäcksler entlang des Erntegutschwads und nimmt diesen bzw. das den Erntegutschwad bildende Erntegut mittels der Pick-up auf.

Innerhalb des Feldhäckslers wird das Erntegut weiter bearbeitet. Hierzu kann der Feldhäcksler beispielsweise und vorzugsweise ein Arbeitsaggregat in Form von Vorpresswalzen zur Verdichtung des Ernteguts vor ihrer Zuführung zu einem weiteren Arbeitsaggregat in Form eines den Vorpresswalzen nachgeschalteten Häckselorgans aufweisen. Mittels des Häckselorgans wird das Erntegut gehäckselt. Das gehäckselte Erntegut wird typischerweise über ein als Auswurfkrümmer ausgebildetes Arbeitsaggregat des Feldhäckslers ausgeworfen, beispielsweise auf ein neben dem Feldhäcksler fahrendes Transportfahrzeug. Um es hierfür auf eine ausreichende Geschwindigkeit zu beschleunigen, kann ein weiteres Arbeitsaggregat des Feldhäckslers von einem dem Häckselorgan nachgeschalteten Beschleunigungsorgan gebildet sein.

Eine Erntemaschine der eingangs beschriebenen Weise ist im Stand der Technik bereits bekannt. Hierzu wird beispielhaft auf die deutsche Offenlegungsschrift DE 197 26 917 A1 hingewiesen. Diese offenbart eine landwirtschaftliche Erntemaschine, die mit einer Vorrichtung zur berührungslosen Abtastung von sich über dem Boden erstreckenden Konturen, beispielsweise eines Erntegutschwads, ausgestattet ist. Dabei wird eine Laserentfernungsmessvorrichtung verwendet, die aus der Laufzeitmessung eines ausgesandten und an einem Konturpunkt reflektierten Laser-Abtaststrahles die Entfernung zu dem Konturpunkt bestimmt. Mittels dieser Vorrichtung ist es insbesondere möglich, die Erntemaschine in ihrer Fahrt entlang des Erntegutschwads seitlich zu steuern, indem mittels der Vorrichtung ein unregelmäßiger Verlauf des Erntegutschwads erkannt wird. Ebenfalls ist beschrieben, dass mittels der Vorrichtung die Kontur des Erntegutschwads abgetastet werden kann, sodass mittels einer Datenverarbeitungseinrichtung ein Schwadquerschnitt des Erntegutschwads ermittelt werden kann. Der so bestimmte Schwadquerschnitt kann sodann zur Einstellung der Fahrgeschwindigkeit der Erntemaschine verwendet werden. Dies kann beispielsweise mit dem Ziel erfolgen, dass das pro Zeiteinheit aufgenommene Volumen an Erntegut ("Volumenstrom") möglichst konstant gehalten wird.

Um die Arbeitsaggregate der Erntemaschine vor Überlastung zu schützen, ist es im Übrigen bekannt, die pro Zeiteinheit verarbeitete Masse des Ernteguts ("Massenstrom") innerhalb der Erntemaschine zu erfassen. Beispielsweise ist es bekannt, bei einem selbstfahrenden Feldhäcksler an den Vorpresswalzen eine Sensoreinrichtung anzuordnen, die dazu vorgesehen und eingerichtet ist, Informationen betreffend eine durch das Erntegut bedingte Auslenkung der Vorpresswalzen zu erfassen. Mittels dieser Informationen kann auf den mittels der Vorpresswalzen bearbeiteten Massenstrom des Ernteguts rückgeschlossen werden. Sofern dieser Massenstrom einen kritischen Wert übersteigt, kann die Fahrgeschwindigkeit des Feldhäckslers reduziert werden, sodass die Arbeitsaggregate des Feldhäckslers vor einer Überlastung geschützt werden.

Diese Vorgehensweise hat den wesentlichen Nachteil, dass die Reaktion im Sinne einer Veränderung der Fahrgeschwindigkeit der Erntemaschine auf sich verändernde Umstände, nämlich insbesondere einen ansteigenden Massenstrom des Ernteguts, erst dann erfolgen kann, wenn der Massenstrom bereits in dem Feldhäcksler vorliegt, das heißt bereits innerhalb der Erntemaschine zur Bearbeitung angelangt ist. Hierdurch kommt es in der Praxis immer wieder zu Überlastungssituationen, in der eine automatisierte Reduktion der Fahrgeschwindigkeit der Erntemaschine zu spät ausgelöst wird, das heißt erst dann, wenn die Überlastung der Arbeitsaggregate nicht mehr abgewendet werden kann.

Der vorliegenden Erfindung liegt daher die Aufgabe zugrunde, eine selbstfahrende landwirtschaftliche Erntemaschine bereitzustellen, die gegenüber dem Stand der Technik besser vor einer Überlastung der Arbeitsaggregate geschützt ist. Ferner ist es Aufgabe der vorliegenden Erfindung, zur Erreichung des genannten Ziels auch ein Verfahren zum Betrieb einer selbstfahrenden landwirtschaftlichen Erntemaschine bereitzustellen.

Die zugrunde liegende Aufgabe wird erfindungsgemäß mittels einer selbstfahrenden landwirtschaftlichen Erntemaschine mit den Merkmalen des Anspruchs 1 gelöst. Vorteilhafte Ausgestaltungen ergeben sich aus den zugehörigen Unteransprüchen, der Beschreibung sowie dem Ausführungsbeispiel.

Die landwirtschaftliche Erntemaschine, die vorzugsweise ein selbstfahrender Feldhäcksler ist, umfasst eine Pick-up, die dazu vorgesehen und eingerichtet ist, Erntegut, das in Form eines Erntegutschwads auf einem landwirtschaftlichen Feld aufliegt, aufzunehmen. Hierzu kann die Pick-up in an sich bekannterweise ausgestaltet sein und beispielsweise eine Fingerwalze aufweisen, mittels der das Erntegut von dem Feld aufgenommen werden kann.

Ferner umfasst die Erntemaschine weitere Arbeitsaggregate, die zur Bearbeitung und Weiterleitung des aufgenommenen Ernteguts nutzbar sind. Hierbei kann es sich beispielsweise und vorzugsweise um Vorpresswalzen, ein Häckselorgan, ein Beschleunigungsorgan und/oder einen Auswurfkrümmer handeln. Weitere und oder andere Arbeitsaggregate sind ebenfalls denkbar.

Ferner umfasst die Erntemaschine einen Antriebsmotor zum Antrieb der Pick-up sowie der weiteren Arbeitsaggregate und zum Vortrieb der Erntemaschine mit einer wählbaren Fahrgeschwindigkeit auf dem landwirtschaftlichen Feld. Der Antriebsmotor ist beispielsweise und vorzugsweise von einem Verbrennungsmotor, beispielsweise in Form eines Dieselmotors, gebildet. Andere Ausgestaltungen, beispielsweise in Form eines Elektromotors, sind ebenso denkbar. Die Antriebsleistung des Antriebsmotors kann in der Erntemaschine beispielsweise und vorzugsweise über Riementriebe und/oder ein hydraulisches System zu der Pick-up und den weiteren Arbeitsaggregaten verteilt werden.

Ferner umfasst die Erntemaschine eine Kameraeinrichtung zur sukzessiven Erfassung digitaler Bilder des auf dem landwirtschaftlichen Feld aufliegenden Erntegutschwads. Die Kameraeinrichtung ist dazu vorgesehen und eingerichtet, an mindestens einer in Vorwärtsfahrrichtung der Erntemaschine vor der Erntemaschine befindlichen Erfassungsstelle den Erntegutschwads digitalbildlich zu erfassen. Diese Erfassungsstelle kann beispielsweise in einem Abstand vor einem in Vorwärtsfahrrichtung vorderen Ende der Erntemaschine angeordnet sein. Der Abstand zwischen dem vorderen Ende der Erntemaschine und der Erfassungsstelle kann beispielsweise im Bereich zwischen 1 m und 10 m, vorzugsweise zwischen 2 m und 5°m, liegen. Vorzugsweise befindet sich die Erfassungsstelle in einem Abstand von 3 m vor dem vorderen Ende der Erntemaschine. Die Kameraeinrichtung ist beispielsweise und vorzugsweise von einer Stereokamera gebildet. Die Frequenz, mit der die digitalen Bilder erfasst werden, kann beispielsweise zwischen 30 Hz und 60 Hz betragen. Andere Frequenzen sind ebenso denkbar.

Ferner umfasst die Erntemaschine eine Geschwindigkeitsregelanlage zur Regelung der Fahrgeschwindigkeit der Erntemaschine in Vorwärtsfahrrichtung während des Erntebetriebs. Solche Geschwindigkeitsregelanlagen sind in der Technik bekannt. Sie dienen dazu, die Fahrgeschwindigkeit der Erntemaschine automatisch zu steuern, das heißt ohne unmittelbare Eingabe des Nutzers der Erntemaschine.

Ferner umfasst die Erntemaschine eine Sensoreinrichtung, die dazu geeignet ist, sukzessive einen Massenstrom des Ernteguts zu erfassen, der von den Arbeitsaggregaten während des Erntebetriebs zu bearbeiten ist. Insbesondere kann die Sensoreinrichtung einem der Arbeitsaggregate zugeordnet sein und dort den Massenstrom bzw. diesbezügliche Informationen erfassen. Beispielsweise und vorzugsweise kann die Sensoreinrichtung an Vorpresswalzen einer als Feldhäcksler ausgebildeten Erntemaschine angeordnet sein und dort eine Auslenkung mindestens einer der Vorpresswalzen erfassen, woraus der Massenstrom ableitbar ist.

Ferner umfasst die Erntemaschine eine Datenverarbeitungseinrichtung, die in Daten übertragender Weise mit der Kameraeinrichtung, der Sensoreinrichtung und der Geschwindigkeitsregelanlage verbunden ist. Die Datenverbindung kann kabelgebunden oder kabellos vorliegen. Die Datenverarbeitungseinrichtung kann beispielsweise in an sich bekannter Weise von einem Industrie-PC gebildet sein, der beispielsweise innerhalb eines Führerhauses der Erntemaschine angeordnet sein, sodass sie besonders einfach für einen Nutzer der Erntemaschine zugänglich und vor Umwelteinflüssen geschützt ist. Die Datenverarbeitungseinrichtung verfügt beispielsweise und vorzugsweise über eine Recheneinheit (Prozessor), einen flüchtigen Speicher (Arbeitsspeicher) und einen nichtflüchtigen Speicher (Festplatte HDD oder SSD). Die Datenverarbeitungseinrichtung ist dazu geeignet, gespeicherte Programme auszuführen und auf diese Weise Daten zu verarbeiten.

Die Datenverarbeitungseinrichtung ist dazu vorgesehen und eingerichtet, die von der Kameraeinrichtung erfassten digitalen Bilder zu empfangen und derart zu verarbeiten, dass ein Schwadquerschnitt des Erntegutschwads an der Erfassungsstelle bestimmt wird. Hierbei ist die Datenverarbeitungseinrichtung bevorzugt derart eingerichtet, dass der Schwadquerschnitt in einer Ebene ermittelt wird, die zumindest im Wesentlichen senkrecht zur Vorwärtsfahrrichtung der Erntemaschine orientiert ist. Die Bestimmung des Schwadquerschnitts kann bevorzugt in übereinstimmender Frequenz zu der Erfassung der digitalen Bilder erfolgen.

Ferner ist die Datenverarbeitungseinrichtung dazu vorgesehen und eingerichtet, von der Geschwindigkeitsregelanlage die aktuelle Fahrgeschwindigkeit der Erntemaschine zu empfangen und aus dieser Fahrgeschwindigkeit und dem Schwadquerschnitt einen Volumenstrom des Ernteguts zu schätzen. In den Dimensionen ergibt sich der Schwadquerschnitt zu einer Fläche (beispielsweise Quadratmeter) und die Fahrgeschwindigkeit zu einer Strecke pro Zeiteinheit (beispielsweise Meter pro Sekunde), sodass sich durch Multiplikation des Schwadquerschnitts mit der Fahrgeschwindigkeit die Dimension Volumen pro Zeiteinheit (beispielsweise Kubikmeter pro Sekunde) ergibt. Die Schätzung des Volumenstroms wird bevorzugt fortlaufend für jeden neu ermittelten Schwadquerschnitt erneut vorgenommen, sodass der aktuelle Stand vor der Erntemaschine fortlaufend abgebildet wird.

Ferner ist die Datenverarbeitungseinrichtung dazu vorgesehen und eingerichtet, basierend auf dem geschätzten Volumenstrom mittels Anwendung eines Umrechnungsfaktors einen Massenstrom des Ernteguts zu prognostizieren, der später in der Erntemaschine von deren Arbeitsaggregaten zu bearbeiten ist. Anders ausgedrückt wird der mit dem jeweiligen Volumenstrom korrespondierende Massenstrom des Ernteguts prognostiziert, der zeitversetzt nach der Erfassung des Schwadquerschnitts von den Arbeitsaggregaten zu bearbeiten ist bzw. bearbeitet werden muss. Die Umrechnung von dem geschätzten Volumenstrom zu dem prognostizierten Massenstrom ergibt sich folglich durch Multiplikation des geschätzten Volumenstroms mit dem Umrechnungsfaktor, der die Dimension Masse pro Volumen (beispielsweise Kilogramm pro Kubikmeter) aufweist. Somit ergibt sich für den Massenstrom die Dimension Masse pro Zeiteinheit (beispielsweise Kilogramm pro Sekunde). Der Umrechnungsfaktor bildet hierbei ein Verhältnis zwischen dem geschätzten Volumenstrom und dem mittels der Arbeitsaggregate zu bearbeitenden Massenstrom ab. Der Umrechnungsfaktor kann im einfachsten Fall beispielsweise vor Beginn des Erntebetriebs auf einen bestimmten Wert festgelegt werden. Besonders zu bevorzugen ist jedoch eine fortlaufende bzw. dynamische Anpassung des Umrechnungsfaktors gemäß nachstehend erläuterter bevorzugter Ausführungsform.

Schließlich ist die Datenverarbeitungseinrichtung dazu vorgesehen und eingerichtet, die Geschwindigkeitsregelanlage dahingehend anzusteuern, dass die Fahrgeschwindigkeit in Abhängigkeit von dem prognostizierten Massenstrom verändert wird. Hierbei kann es besonders vorteilhaft sein, wenn der prognostizierte Massenstrom nur eine von mehreren Eingangsgrößen darstellt, die zur Bestimmung der gewünschten Fahrgeschwindigkeit herangezogen wird. Beispielsweise kann es besonders vorteilhaft sein, wenn die Datenverarbeitungseinrichtung den aktuell zu bearbeitenden Massenstrom, der sich durch die Erfassung mittels der Sensoreinrichtung ergibt, und ergänzend den sich aus dem Schwadquerschnitt, der Fahrgeschwindigkeit und dem Umrechnungsfaktor ergebenden prognostizierten Massenstrom kombiniert berücksichtigt und auf dieser Basis die Geschwindigkeitsregelanlage ansteuert.

Die Veränderung der Fahrgeschwindigkeit kann beispielsweise dann vorgenommen werden, wenn festgestellt wird, dass der prognostizierte Massenstrom betragsmäßig so groß ist, dass dies innerhalb der Erntemaschine zu einer Überlastung mindestens eines der Arbeitsaggregate führen würde. Hierzu ist es besonders vorteilhaft, wenn der Wert des prognostizierten Massenstroms mittels der Datenverarbeitungseinrichtung mit mindestens einem Schwellenwert verglichen wird, der eine Höchstbelastung der Arbeitsaggregate abbildet. Wenn der prognostizierte Massenstrom diesen Schwellenwert überschreitet, ist dies die Veranlassung für die Datenverarbeitungseinrichtung, die Geschwindigkeitsregelanlage dahingehend anzusteuern, dass die Fahrgeschwindigkeit der Erntemaschine reduziert wird. Hierdurch wird unmittelbar der Volumenstrom des aufzunehmenden Ernteguts reduziert und dementsprechend proportional zu der Reduktion des Volumenstroms ferner auch der Massenstrom reduziert.

Die erfindungsgemäße Erntemaschine hat viele Vorteile. Insbesondere bietet sie die Möglichkeit, den Massenstrom, der mittels der Arbeitsaggregate bearbeitet werden muss, bereits zu einem Zeitpunkt zu prognostizieren, zudem er noch nicht in der Erntemaschine angekommen ist. Stattdessen kann die Prognose vorzeitig stattfinden, nämlich zu einem Zeitpunkt, zu dem an der Erfassungsstelle in Vorwärtsfahrrichtung vor der Erntemaschine der Schwadquerschnitt des Erntegutschwads ermittelt wird. Aus dieser Größe wird der Massenstrom, der zeitlich erst später (je nach Fahrgeschwindigkeit der Erntemaschine beispielsweise wenige Sekunden später) von den Arbeitsaggregaten zu bearbeiten ist, durch Anwendung des Umrechnungsfaktors prognostiziert. Hierdurch können Änderungen im Erntegutbestand vorzeitig erkannt werden. Somit verbleibt für einen gegebenenfalls notwendigen Eingriff betreffend die Fahrgeschwindigkeit der Erntemaschine genügend Zeit, um die Fahrgeschwindigkeit noch zu verändern (insbesondere zu reduzieren), sodass nicht der eingangs prognostizierte Massenstrom, sondern demgegenüber ein betragsmäßig anderer Massenstrom schließlich von den Arbeitsaggregaten der Erntemaschine tatsächlich zu bearbeiten ist. Mit anderen Worten findet eine proaktive Anpassung der Fahrgeschwindigkeit der Erntemaschine an den Erntegutbestand statt. Hierdurch kann insbesondere einer akuten Überlastungssituation der Arbeitsaggregate, die im Stand der Technik auftreten kann (und erfahrungsgemäß in der Praxis immer wieder auftritt), vorgebeugt werden. Abseits eines reinen Überlastungsschutzes kann außerdem der Gutfluss des Ernteguts in der Erntemaschine vergleichmäßigt werden, wodurch der Betrieb der Erntemaschine optimiert wird.

Die Prognose des Massenstroms bietet überdies den Vorteil, dass Maschinenparameter der Erntemaschine bereits in Erwartung des Massenstroms geregelt werden können, sodass beispielsweise die Arbeitsaggregate bereits in vorteilhafter Weise fertig konfiguriert sind, wenn der Massenstrom an ihnen ankommt. Hierdurch kann die Bearbeitung des Ernteguts optimiert werden.

Der Zeitraum, der für die Veränderung der Fahrgeschwindigkeit nutzbar ist, ergibt sich aus dem Abstand der Erfassungsstelle in Vorwärtsfahrrichtung vor dem vorderen Ende der Erntemaschine und der Fahrgeschwindigkeit der Erntemaschine. Der Zeitraum, innerhalb dessen das an der Erfassungsstelle befindliche Erntegut schließlich an den Arbeitsaggregaten der Erntemaschine angelangt ist und bearbeitet werden muss, wird im Sinne der vorliegenden Anmeldung als "Totzeit" bezeichnet. Am Beispiel des selbstfahrenden Feldhäckslers ist davon auszugehen, dass das kritischste Arbeitsaggregat, (das heißt das Arbeitsaggregat, das für eine Überlastung am meisten anfällig ist) von den Vorpresswalzen oder dem Häckselorgan gebildet ist. Mithin wäre es bei einer von einem Feldhäcksler gebildeten Erntemaschine besonders sinnvoll, die Fahrgeschwindigkeit im Falle des Falles innerhalb der Totzeit nach unten zu korrigieren, um den Massenstrom, der an den Arbeitsaggregaten tatsächlich ankommt, betragsmäßig zu verkleinern.

Wie vorstehend bereits angedeutet, ist in einer bevorzugten Ausführungsform der Erntemaschine die Datenverarbeitungseinrichtung dazu vorgesehen und eingerichtet, den Umrechnungsfaktor während des Erntebetriebs dynamisch anzupassen. Dies kann besonders bevorzugt nach dem Prinzip der Kennfeldadaption erfolgen. Beispielsweise und vorzugsweise können fortlaufend Werte betreffend den tatsächlich innerhalb der Erntemaschine verarbeiteten Massenstrom des Ernteguts mittels der Sensoreinrichtung erfasst und mit dem prognostizierten Massenstrom und/oder dem geschätzten Volumenstrom ins Verhältnis gesetzt werden. Etwaige Abweichungen können systematisch durch eine Korrektur bzw. Änderung des Umrechnungsfaktors ausgeglichen oder zumindest vermindert werden. Da sich der Erntegutschwad während des Erntebetriebs ständig verändern kann (beispielsweise bedingt durch verschiedene Feuchtigkeitsgrade des Ernteguts, sich ändernde Dichte des Ernteguts oder dergleichen), ist anzunehmen, dass die Korrelation zwischen dem geschätzten Volumenstrom und dem tatsächlichen Massenstrom, der von den Arbeitsaggregaten zu bearbeiten ist, sich innerhalb einer gewissen Bandbreite während des laufenden Erntebetriebs ständig verändert. Um diesen Veränderungen gerecht zu werden und die Prognose des Massenstroms möglichst genau anstellen zu können, findet bevorzugt die dynamische Anpassung des Umrechnungsfaktors statt.

Sofern die beschriebene dynamische Anpassung des Umrechnungsfaktors vorgenommen wird, kann es weiterhin besonders vorteilhaft sein, wenn die Datenverarbeitungseinrichtung dazu vorgesehen und eingerichtet ist, wie folgt vorzugehen:

Zunächst werden quasistationäre Datenpunkte, vorzugsweise solche betreffend Erntegutparameter des Ernteguts, Maschinenparameter der Erntemaschine und/oder Umweltparameter der Umwelt, ermittelt. Hierbei kann es sich insbesondere um den mittels der Sensoreinrichtung erfassten, tatsächlich innerhalb der Erntemaschine zur Bearbeitung anfallenden Massenstrom im Verhältnis zu dem geschätzten Volumenstrom handeln. Die Datenpunkte können beispielsweise mit einer Frequenz im Bereich zwischen 0,5 Hz und 10 Hz ermittelt werden.

Nach Ermittlung einer hinreichenden Anzahl solcher Datenpunkte wird ein Offset der ermittelten Datenpunkte gegenüber einem Initialkennfeld ermittelt. Eine Anzahl beispielsweise im Bereich zwischen 10 und 100 Datenpunkten kann als hinreichend angesehen werden. Das Initialkennfeld bildet den geschätzten Volumenstrom auf den prognostizierten Massenstrom ab. Das Initialkennfeld kann zweidimensional (Gerade, Kurve) oder mehrdimensional sein, je nach der Anzahl berücksichtigter Parameter. Das Initialkennfeld kann linear, quadratisch oder höherwertig nichtlinear sein und/oder einen konstanten Anteil umfassen. Der Offset ergibt sich durch die Abweichung des prognostizierten Massenstroms im Verhältnis zu dem geschätzten Volumenstrom im Vergleich zu dem erfassten Massenstrom im Verhältnis zu dem geschätzten Volumenstrom. Beispielsweise kann das Verhältnis zwischen dem erfassten Massenstrom und dem geschätzten Volumenstrom im Mittel 10% oberhalb des Verhältnisses zwischen dem prognostizierten Massenstrom und dem geschätzten Volumenstrom liegen. **In** diesem Beispiel stellen die genannten 10% den Offset dar. Sodann wird das Initialkennfeld um den Offset korrigiert.

Anschließend werden die ermittelten quasistationäre Datenpunkte in das korrigierte Initialkennfeld einsortiert. Sodann wird unter Berücksichtigung der einsortierten Datenpunkte ausgehend von dem korrigierten Initialkennfeld ein aktualisiertes Kennfeld berechnet, das das korrigierte Initialkennfeld ersetzt. Der Umrechnungsfaktor wird schließlich anhand des aktualisierten Kennfelds ermittelt.

Dieser Ablauf wird in einer Schleife fortlaufend während des Erntebetriebs wiederholt, wobei das zuletzt berechnete aktualisierte Kennfeld bei Beginn der nächsten Schleife als (neues) Initialkennfeld verwendet wird. Das aktualisierte Kennfeld, anhand dessen der Umrechnungsfaktor bestimmt wird, bildet den geschätzten Volumenstrom auf den prognostizierten Massenstrom ab.

Im einfachsten Fall ist das (Initial-)Kennfeld von einer unter einer Steigung verlaufenden Geraden gebildet, die im zweidimensionalen Koordinatensystem verläuft, wobei das Koordinatensystem den geschätzten Volumenstrom gegen den prognostizierten Massenstrom abträgt. Die Gerade bildet das Verhältnis der beiden Parameter zueinander ab. Anhand der ermittelten Werte des tatsächlichen Massenstroms können Datenpunkte, die das Verhältnis des tatsächlichen Massenstroms im Verhältnis zu einem jeweils zugehörigen geschätzten Volumenstrom wiedergeben, angegeben werden. Anhand dieser Datenpunkte ergibt sich ein Offset zwischen den Datenpunkten und der zuletzt ermittelten Geraden (diese stellt das Initialkennfeld dar), das heißt eine systematische Abweichung zwischen der Gerade und den Datenpunkten. In Abhängigkeit des Offsets wird in diesem Beispiel die Gerade als Ganze verschoben, je nach Datenlage nach oben oder nach unten. Die verschobene Gerade bildet das aktualisierte Initialkennfeld. Sodann wird unter Berücksichtigung der einsortierten Datenpunkte die Gerade neu berechnet, wobei sie auch ihre Steigung ändern kann. Die neue Gerade stellt somit das aktualisierte Kennfeld dar. Sie kann insbesondere nach Art der Regressionsgeraden ermittelt werden. Dieses Vorgehen ist auch für höherwertigere Initialkennfelder denkbar.

Die fortlaufende Aktualisierung des Kennfelds, das heißt das fortlaufende bzw. sich immer wiederholende Durchlaufen der beschriebenen Schleife führt dazu, dass das Kennfeld, aus dem sich der Umrechnungsfaktor ergibt, fortlaufend an die aktuell herrschenden Bedingungen während des Erntebetriebs angepasst wird. Hierdurch ist eine besonders hohe Genauigkeit des Umrechnungsfaktors erreichbar. Umso genauer der Umrechnungsfaktor ist, desto geringer ist das Risiko, dass der prognostizierte Massenstrom des Ernteguts, auf dessen Basis eine mögliche Veränderung der Fahrgeschwindigkeit der Erntemaschine vorgenommen wird, von dem tatsächlich mittels der Erntemaschine zu bearbeitenden Massenstrom signifikant abweicht. Eine solche Abweichung könnte schlechtestenfalls zur Folge haben, dass die Fahrgeschwindigkeit geändert wird oder nicht geändert wird, obwohl genau das Gegenteil für einen gewünschten Betrieb der Erntemaschine wünschenswert gewesen wäre.

In einer vorteilhaften Ausführungsform der Erntemaschine ist Datenverarbeitungseinrichtung dazu vorgesehen und eingerichtet, zu überprüfen, ob der prognostizierte Massenstrom betragsmäßig oberhalb eines vorgegebenen Schwellenwerts liegt, und für den Fall, dass dies so ist, die Geschwindigkeitsregelanlage dahingehend anzusteuern, dass die Fahrgeschwindigkeit reduziert wird. Dies erfolgt gemäß vorstehender Erläuterung mit dem Ziel, die Arbeitsaggregate der Erntemaschine vor Überlastung zu schützen.

Abseits dieser Schutzfunktion kann es weiterhin besonders vorteilhaft sein, wenn die Datenverarbeitungseinrichtung ferner dazu vorgesehen und eingerichtet ist, die Geschwindigkeitsregelanlage dahingehend anzusteuern, dass die Fahrgeschwindigkeit mit dem Ziel verändert wird, den Massenstrom des Ernteguts so zu beeinflussen, dass die Erntemaschine möglichst auf eine vorgegebenen Betriebspunkt betrieben wird. Beispielsweise ist es denkbar, dass der Maschinenführer für den Erntebetrieb vorgibt, dass die Erntemaschine mit maximaler Produktivität betrieben werden soll, die beispielsweise nach dem Parameter "bearbeitetes Erntegut pro Zeiteinheit" beurteilt wird. Dies ist in der Regel dann der Fall, wenn die Arbeitsaggregate bis nah an ihre Belastungsgrenze heran in ihrer Leistungsfähigkeit ausgenutzt werden. Mit dieser Vorgabe und in Kenntnis dessen, welchen maximalen Massenstrom des Ernteguts die Arbeitsaggregate diesseits ihrer Überlastungsgrenze maximal verarbeiten können, ist die Datenverarbeitungseinrichtung dazu in der Lage, die Geschwindigkeitsregelanlage so anzusteuern, dass der prognostizierte Massenstrom fortlaufend im Erntebetrieb möglichst nah an den maximalen Massenstrom approximiert wird. Auch ist es denkbar, dass die Erntemaschine mit der Maßgabe einer möglichst hohen Effizienz betrieben werden soll, wobei die Effizienz beispielsweise nach dem Parameter "Kraftstoffverbrauch pro Masse geernteten Ernteguts" beurteilt werden kann. Mit dieser Vorgabe der maximalen Effizienz ist ebenfalls ein entsprechender Massenstrom des Ernteguts logisch verknüpft und bekannt, sodass die Datenverarbeitungseinrichtung die Geschwindigkeitsregelanlage dahingehend ansteuern kann, dass der prognostizierte Massenstrom fortlaufend möglichst nah an diesen, der maximalen Effizienz der Erntemaschine zugeordneten Massenstrom angenähert wird.

Grundsätzlich hat auch folgende Ausgestaltung in Kombination mit den Merkmalen des Oberbegriffs des Anspruchs 1 eigenen erfinderischen Wert: Die Kameraeinrichtung kann dazu eingerichtet sein, digitale Bilder des auf dem landwirtschaftlichen Feld aufliegenden Erntegutschwads an einer Mehrzahl von in Vorwärtsfahrtrichtung der Erntemaschine vor der Erntemaschine befindlichen Erfassungsstellen zu erfassen, wobei die Erfassungsstellen sich in unterschiedlichen in Vorwärtsfahrrichtung der Erntemaschine gemessenen Abständen von einem in Vorwärtsfahrrichtung der Erntemaschine vorderen Ende der Erntemaschine befinden.

Sofern dies der Fall ist, kann es weiterhin vorteilhaft sein, wenn die Datenverarbeitungseinrichtung dazu vorgesehen und eingerichtet ist, anhand der an der Mehrzahl von Erfassungsstellen erfassten Mehrzahl von Schwadquerschnitten näherungsweise ein Schwadvolumen des Erntegutschwads in dem Bereich zwischen der in Vorwärtsfahrrichtung der Erntemaschine vordersten Erfassungsstelle und der in Vorwärtsfahrrichtung der Erntemaschine hintersten Erfassungsstelle zu ermitteln. Zwischen den einzelnen Erfassungsstellen kann interpoliert werden, beispielsweise linear, quadratisch oder kubisch, um den Verlauf des Erntegutschwads zwischen den Erfassungsstellen zu approximieren.

Sofern das Schwadvolumen in beschriebener Weise ermittelt wird, kann es weiterhin vorteilhaft sein, wenn die Datenverarbeitungseinrichtung dazu vorgesehen und eingerichtet ist, in Abhängigkeit des ermittelten Schwadvolumens die Geschwindigkeitsregelanlage dahingehend anzusteuern, dass die Fahrgeschwindigkeit auf einen mit dem ermittelten Schwadvolumen korrespondierenden Wert eingestellt wird. Dieses Einstellen besteht im laufenden Erntebetrieb in einer Veränderung der Fahrgeschwindigkeit, mit der die Erntemaschine zu diesem Zeitpunkt in Vorwärtsrichtung fährt.

Die vorstehend im Zusammenhang mit der selbstfahrenden landwirtschaftlichen Erntemaschine beschriebenen Funktionen der Datenverarbeitungseinrichtung sowie der weiteren Komponenten der Erntemaschine sind ebenso in verfahrensmäßiger Hinsicht von eigenem erfinderischen Wert. Mithin wird die zugrunde liegende Aufgabe ferner durch ein Verfahren zum Betrieb einer selbstfahrenden landwirtschaftlichen Erntemaschine gelöst, das die Merkmale des Anspruchs 8 aufweist. Vorteilhafte Ausgestaltungen ergeben sich aus den zugehörigen Unteransprüchen, der Beschreibung und dem Ausführungsbeispiel.

Das erfindungsgemäße Verfahren ist mittels des der erfindungsgemäßen selbstfahrenden landwirtschaftlichen Erntemaschine besonders gut durchführbar. Dies gilt ebenso für die vorteilhaften Ausgestaltungen der erfindungsgemäßen Erntemaschine.

Die sich durch das Verfahren erzielten Vorteile ergeben sich analog zu der Erntemaschine. Die als vorteilhaft beschriebenen Ausgestaltungen der Erntemaschine sind analog für das erfindungsgemäße Verfahren ebenso vorteilhaft und stellen somit analoge vorteilhafte Weiterbildungen des erfindungsgemäßen Verfahrens dar.

Die Erfindung ist nachstehend anhand eines Ausführungsbeispiels, das in den Figuren dargestellt ist, näher erläutert. Es zeigt:
- Fig. 1:: Einen Querschnitt durch eine erfindungsgemäße selbstfahrende landwirtschaftliche Erntemaschine,
- Fig. 2:: Ablaufdiagramm zur Änderung der Fahrgeschwindigkeit der Erntemaschine gemäß Figur 1.

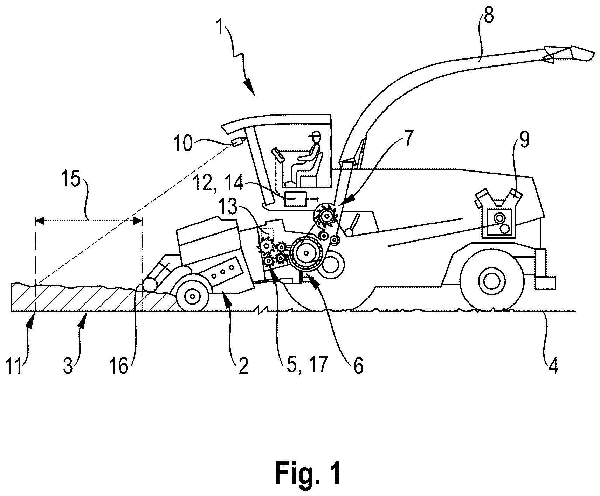

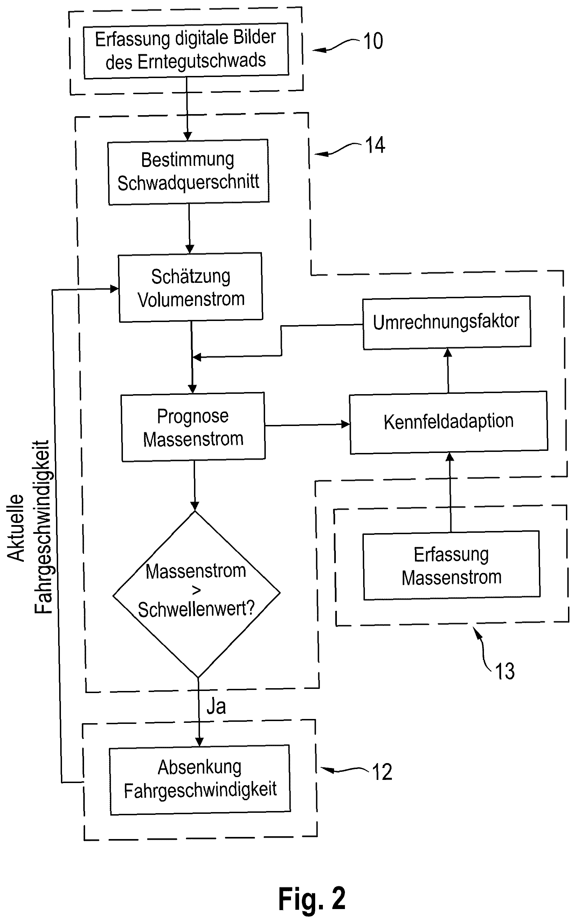

Ein Ausführungsbeispiel, das in den **Figuren 1** **und** **2** dargestellt ist, umfasst eine erfindungsgemäße selbstfahrende landwirtschaftliche Erntemaschine **1,** die hier von einem selbstfahrenden Feldhäcksler gebildet ist. Dieser umfasst eine Pick-up **2,** die dazu vorgesehen und eingerichtet ist, auf einem landwirtschaftlichen Feld **4** aufliegendes Erntegut aufzunehmen. Das Erntegut liegt in Form eines Erntegutschwads **3** auf dem Feld **4** auf. Das aufgenommene Erntegut wird innerhalb der Erntemaschine **1** mittels weiterer Arbeitsaggregate **5,** 6, **7, 8** der Erntemaschine **1** bearbeitet. In dem gezeigten Beispiel ist ein erstes Arbeitsaggregat **5** von Vorpresswalzen **17** gebildet, die dazu dienen, das über die Pick-up **2** aufgenommene Erntegut vor seiner Zuführung zu einem den Vorpresswalzen 17 nachgeschalteten zweiten Arbeitsaggregat **6,** das von einem Häckselorgan gebildet ist, zu komprimieren ("pressen"). Mittels des zweiten Arbeitsaggregats **6** wird das Erntegut gehäckselt und sodann einem dritten Arbeitsaggregate **7** zugeführt, mittels dessen das gehäckselte Erntegut beschleunigt wird. Bei dem dritten Arbeitsaggregat **7** handelt es sich mithin um ein Beschleunigungsorgan. Das so beschleunigte, gehäckselte Erntegut wird über ein viertes Arbeitsaggregat **8,** das von einem Auswurfkrümmer gebildet ist, aus der Erntemaschine **1** ausgeworfen. Hierdurch kann das Erntegut insbesondere auf ein Transportfahrzeug übergeladen werden, das vor, hinter oder neben der Erntemaschine **1** fahren kann. Die Erntemaschine **1** umfasst ferner einen Antriebsmotor **9,** mittels dessen die Pick-up **2** sowie die übrige Arbeitsaggregate **5, 6, 7, 8** angetrieben werden können. Ferner dient der Antriebsmotor **9** dazu, die Erntemaschine **1** mit einer wählbaren Fahrgeschwindigkeit auf dem Feld **4** anzutreiben.

Die Erntemaschine **1** umfasst in dem gezeigten Beispiel an einem oberen Ende eines Führerhauses eine Kameraeinrichtung **10,** die auf einen Erfassungsbereich in Vorwärtsfahrrichtung vor der Erntemaschine **1** gerichtet ist. Auf diese Weise ist die Kameraeinrichtung **10** dazu eingerichtet, sukzessive digitale Bilder des auf dem Feld **4** aufliegenden Erntegutschwads **3** zu erfassen. Diese Erfassung erfolgt derart, dass anhand der digitalen Bilder ein Schwadquerschnitt des Erntegutschwads 3 an einer Erfassungsstelle **11** möglich ist. Die Erfassungsstelle **11** befindet sich in Vorwärtsfahrrichtung der Erntemaschine **1** betrachtet vor der Erntemaschine **1.** In dem gezeigten Beispiel befindet sich die Erfassungsstelle **11** gemessen in Vorwärtsfahrrichtung der Erntemaschine **1** in einem Abstand **15** von einem in Vorwärtsfahrrichtung vorderen Ende **16** der Erntemaschine **1** von 3 m.

Ferner umfasst die Erntemaschine **1** eine Geschwindigkeitsregelanlage **12,** die dazu vorgesehen und eingerichtet ist, die Fahrgeschwindigkeit der Erntemaschine in Vorwärtsfahrrichtung zu regeln.

Ferner umfasst die Erntemaschine **1** eine Sensoreinrichtung **13,** die dazu vorgesehen und eingerichtet ist, sukzessive einen mittels der Erntemaschine **1** zu bearbeitenden Massenstrom des Ernteguts zu erfassen. Mit anderen Worten dient die Sensoreinrichtung **13** dazu, den Massenstrom zu erfassen, der tatsächlich von den Arbeitsaggregaten **5, 6, 7, 8** zu bearbeiten ist. In dem gezeigten Beispiel ist die Sensoreinrichtung **13** in vorteilhafter Weise dem von den Vorpresswalzen **17** gebildeten ersten Arbeitsaggregat **5** zugeordnet. Dort kann die Sensoreinrichtung **13** eine Auslenkung der Vorpresswalzen **17** erfassen, wodurch auf den Massenstrom des Ernteguts rückgeschlossen werden kann.

Ferner umfasst die Erntemaschine **1** eine Datenverarbeitungseinrichtung **14.** Diese ist in Daten übertragender Weise mit der Kameraeinrichtung **10,** der Geschwindigkeitsregelanlage **12** und der Sensoreinrichtung **13** verbunden. Die Datenverarbeitungseinrichtung **14** ist dazu vorgesehen und eingerichtet, Daten mit der Kameraeinrichtung **10,** der Geschwindigkeitsregelanlage **12** und der Sensoreinrichtung **13** in solcher Weise auszutauschen und diese Daten im Weiteren zu verarbeiten, dass die Fahrgeschwindigkeit der Erntemaschine **1** in Vorwärtsfahrrichtung in solcher Weise gesteuert wird, dass eine Überlastung der Arbeitsaggregate **5, 6, 7, 8** vermieden wird. Bevorzugterweise kann diese Steuerung der Fahrgeschwindigkeit ferner zum Ziel haben, den Gutfluss des Ernteguts innerhalb der Erntemaschine **1** möglichst auf einem gleichmäßigen Niveau zu halten. Ferner kann diese Steuerung der Fahrgeschwindigkeit zum Ziel haben, die Erntemaschine 1 während des Erntebetriebs möglichst auf einem vorgegebenen Betriebspunkt zu halben bzw. zu betreiben. Das Verfahren, gemäß dem die Erntemaschine **1** betrieben werden kann, ergibt sich besonders gut anhand des Flussdiagramms aus **Figur 2****.**

Mittels der Kameraeinrichtung **10** werden an der Erfassungsstelle **11** sukzessive digitale Bilder aufgenommen. Diese werden an die Datenverarbeitungseinrichtung **14** weitergeleitet und mittels letzterer in solcher Weise verarbeitet, dass ein Schwadquerschnitt des Erntegutschwads **3** an der Erfassungsstelle **11** bestimmt wird. Anhand des ermittelten Schwadquerschnitts, der die Dimension einer Fläche hat, wird mittels der Datenverarbeitungseinrichtung **14** unter Heranziehung der aktuellen Fahrgeschwindigkeit der Erntemaschine **1,** die die Dimension Strecke pro Zeit hat, ein Volumenstrom des Ernteguts geschätzt, der bei Weiterfahrt der Erntemaschine **1** mit der aktuellen Fahrgeschwindigkeit von der Erntemaschine **1** aufgenommen werden wird, wenn diese im Zuge der Weiterfahrt die Erfassungsstelle **1** erreicht. Die Zeit, die zwischen der Erfassung des Schwadquerschnitts an der Erfassungsstelle **11** und der Bearbeitung des Ernteguts, das sich an der Erfassungsstelle **11** befindet, verstreicht, hängt von der Fahrgeschwindigkeit ab und wird als "Totzeit" bezeichnet. Der geschätzte Volumenstrom hat die Dimension Volumen pro Zeit.

Im nächsten Schritt wird mittels der Datenverarbeitungseinrichtung **14** anhand des geschätzten Volumenstroms mittels Multiplikation mit einem Umrechnungsfaktor ein Massenstrom des Ernteguts prognostiziert, der mittels der Arbeitsaggregate **5, 6, 7, 8** der Erntemaschine **1** zu bearbeiten sein wird, wenn die Erntemaschine **1** mit der aktuellen Fahrgeschwindigkeit weiter in Vorwärtsfahrrichtung fährt. Die Prognose ist dabei auf einen Zeitpunkt gerichtet, zu dem die Erntemaschine **1** bei Beibehaltung der Fahrgeschwindigkeit die Erfassungsstelle **11** erreichen wird. Die Totzeit kann beispielsweise und vorzugsweise aus dem Abstand **15** der Erfassungsstelle **11** von dem vorderen Ende **16** der Erntemaschine **1** geteilt durch die aktuelle Fahrgeschwindigkeit berechnet werden. Der Umrechnungsfaktor hat die Dimension einer Dichte, das heißt Masse pro Volumen. Der Massenstrom hat somit infolge Multiplikation des Volumenstroms mit dem Umrechnungsfaktor die Dimension Masse pro Zeit.

Mit der Prognose des Massenstroms ist die Datenverarbeitungseinrichtung **14** sodann dazu in der Lage, den Betrag des prognostizierten Massenstroms mit einem voreingestellten Schwellenwert betragsmäßig zu vergleichen. Dieser Schwellenwert orientiert sich daran, welcher Massenstrom des Ernteguts maximal von den Arbeitsaggregaten **5, 6, 7, 8** der Erntemaschine **1** bearbeitet werden kann, ohne dass diese überlastet werden. Dieser Schwellenwert kann als fester Maschinenparameter der Erntemaschine **1** vorgegeben sein. Auch ist es denkbar, dass der Schwellenwert in Abhängigkeit äußerer Parameter, beispielsweise von Umweltparametern oder Maschinenparametern der Erntemaschine 1, dynamisch angepasst wird. Falls der prognostizierte Massenstrom den (aktuellen) Schwellenwert überschreitet, steuert die Datenverarbeitungsrichtung **14** die Geschwindigkeitsregelanlage **12** dahingehend an, dass diese die Fahrgeschwindigkeit der Erntemaschine **1** absenkt. Auf diese Weise wird der Massenstrom, der bei Weiterfahrt der Erntemaschine **1** tatsächlich von den Arbeitsaggregaten **5, 6, 7, 8** zu bearbeiten ist, gegenüber dem zuvor prognostizierten Wert abgesenkt. Auf diese Weise werden die Arbeitsaggregate **5, 6, 7, 8** proaktiv vor Überlastung geschützt.

Der Umrechnungsfaktor wird in dem gezeigten Beispiel fortlaufend an die aktuellen Bedingungen angepasst. Hierzu kommt in dem gezeigten Beispiel das Verfahren der sogenannten Kennfeldadaption zum Einsatz. Dieses basiert hier und vorzugsweise auf einem Vergleich des prognostizierten Massenstroms mit dem mittels der Sensoreinrichtung **13** an den Vorpresswalzen **17** erfassten Massenstrom, der tatsächlich an den Vorpresswalzen **17** angelangt.

Zur Bestimmung des Kennfelds, anhand dessen der Umrechnungsfaktor ermittelt wird, das heißt den geschätzten Volumenstrom auf den prognostizierten Massenstrom abbildet, wird zunächst von einem Initialkennfeld ausgegangen. Für die Adaption dieses Initialkennfelds werden quasistationäre Datenpunkte ermittelt. Diese betreffen hier beispielsweise und vorzugsweise den mittels der Sensoreinrichtung **13** erfassten Massenstrom des Ernteguts an den Vorpresswalzen **17** im Verhältnis zu dem zugehörigen geschätzten Volumenstrom. Sobald genügend Datenpunkte ermittelt wurden, wird ein Offset zwischen den ermittelten Datenpunkten und dem Initialkennfeld bestimmt. Beispielsweise kann sich ergeben, dass das Verhältnis zwischen dem tatsächlich an den Vorpresswalzen **17** angelangenden Massenstrom und dem geschätzten Volumenstrom im Mittel 10% oberhalb des Verhältnisses zwischen dem prognostizierten Massenstrom und dem geschätzten Volumenstrom liegt, das heißt die ermittelten Datenpunkte ein im Mittel um 10% größeres Verhältnis zwischen geschätztem Volumenstrom und dem zu bearbeitenden Massenstrom ergeben als dies durch das Initialkennfeld abgebildet ist. Dieser Wert stellt in diesem Beispiel folglich den Offset zwischen dem Initialkennfeld und den ermittelten Datenpunkten dar.

Im nächsten Schritt wird das Initialkennfeld um den Offset korrigiert. In diesem Beispiel wird das Initialkennfeld in Gänze mithin um den genannten Wert von 10% angehoben. Bei der Anwendung dieses korrigierten Initialkennfelds würde mithin mit einem Eingangswert des geschätzten Volumenstroms im Mittel ein 10% höherer Wert des Umrechnungsfaktors auf den prognostizierten Massenstrom ausgegeben werden, als dies bei dem Initialkennfeld der Fall war.

Im nächsten Schritt werden die ermitteln Datenpunkte in das korrigierte Initialkennfeld einsortiert und anschließend unter Berücksichtigung der einsortierten Datenpunkte ausgehend von dem korrigierten Initialkennfeld ein aktualisiertes Kennfeld berechnet. Dieses aktualisierte Kennfeld ersetzt fortan das korrigierte Initialkennfeld für die Bestimmung des Umrechnungsfaktors, der demzufolge im Anschluss anhand des aktualisierten Kennfelds ermittelt wird.

Dieser Vorgang wird nach Art einer Schleife fortlaufend während des Erntebetriebs wiederholt, wobei für die Korrektur des Initialkennfelds, das im nächsten Umlauf der Schleife von dem korrigierten Kennfeld des vorausgegangenen Umlaufs der Schleife gebildet ist, stets aktuelle Datenpunkte des erfassten Massenstroms verwendet werden. Auf diese Weise wird die Abbildung des geschätzten Volumenstroms auf den prognostizierten Massenstrom fortlaufend während des Erntebetriebs aktuell gehalten, wodurch die Prognose des Massenstroms ausgehend von dem geschätzten Volumenstrom trotz sich ständig ändernder Erntebedingungen stets mit hoher Genauigkeit erfolgen kann.

In bevorzugter Ausgestaltung ist die Datenverarbeitungsrichtung **14** dazu vorgesehen und eingerichtet, die Geschwindigkeitsregelanlage **12** dahingehend anzusteuern, dass der mittels der Arbeitsaggregate 5, **6, 7, 8** zu verarbeitende Massenstrom des Ernteguts möglichst über die Dauer des Erntebetriebs hinweg gleichmäßig ist. Dies ist gleichbedeutend mit einer Vergleichmäßigung des Gutflusses des Ernteguts innerhalb der Erntemaschine **1.** Hierdurch kann die Qualität des bearbeiten Ernteguts, das nach der Bearbeitung durch die Arbeitsaggregate **5, 6, 7, 8** die Erntemaschine **1** verlässt, positiv beeinflusst werden. Insbesondere kann eine gleichmäßige Partikelgröße des gehäckselten Ernteguts erzielt werden.

Ferner ist die Datenverarbeitungsrichtung **14** in dem gezeigten Beispiel in vorteilhafter Weise dazu vorgesehen und eingerichtet, die Geschwindigkeitsregelanlage dahingehend anzusteuern, dass die Fahrgeschwindigkeit verändert wird, um den prognostizierten Massenstrom so zu beeinflussen, dass die Erntemaschine möglichst auf einem vorgegebenen Betriebspunkt betrieben wird. Somit besteht für den Maschinenführer der Erntemaschine **1** die Möglichkeit, über eine nicht dargestellte Eingabeeinheit einen gewünschten Betriebspunkt der Erntemaschine einzugeben, anhand dessen die Datenverarbeitungseinrichtung **14** sich fortan bei der Ansteuerung der Geschwindigkeitsregelanlage **12** orientieren wird. Beispielsweise kann der Maschinenführer vorgeben, dass die Erntemaschine **1** mit maximaler Effizienz betrieben werden soll, wobei als Gradmesser für die Bemessung der Effizienz beispielsweise und vorzugsweise der Verbrauch von Kraftstoff pro Masse verarbeiteten Ernteguts herangezogen wird (beispielsweise in der Dimension Liter Kraftstoff pro Tonne verarbeitetem Erntegut). Die Zielvorgabe für die Wahl der Fahrgeschwindigkeit der Erntemaschine **1** besteht darin, dass der zu bearbeitenden Massenstrom möglichst nah an einen Wert heranreichen soll, der mit diesem gewünschten Betriebspunkt der Erntemaschine **1** korrespondiert. Welcher Massenstrom dies ist, kann entweder initial fest vorgegeben oder ebenfalls während des Erntebetriebs dynamisch angepasst werden. Die Ansteuerung der Geschwindigkeitsregelanlage **12** erfolgt bei diesem Betriebsmodus mit der Maßgabe, dass der prognostizierte Massenstrom möglichst dem vorgegebenen Massenstrom entsprechen soll. Andere Vorgaben für gewünschte Betriebspunkt der Erntemaschine **1** sind ebenfalls denkbar, beispielsweise der Betrieb der Erntemaschine **1** mit maximaler Produktivität (möglichst hoher Durchsatz an Masse von Erntegut pro Zeiteinheit).

### Bezugszeichenliste

- 1: Erntemaschine
- 2: Pick-up
- 3: Erntegutschwad
- 4: landwirtschaftliches Feld
- 5: Arbeitsaggregat
- 6: Arbeitsaggregat
- 7: Arbeitsaggregat
- 8: Arbeitsaggregat
- 9: Antriebsmotor
- 10: Kameraeinrichtung
- 11: Erfassungsstelle
- 12: Geschwindigkeitsregelanlage
- 13: Sensoreinrichtung
- 14: Datenverarbeitungseinrichtung
- 15: Abstand
- 16: vorderes Ende der Erntemaschine
- 17: Vorpresswalzen

## Patentansprüche

1. Selbstfahrende landwirtschaftliche Erntemaschine (1), insbesondere ein selbstfahrender Feldhäcksler, umfassend
- eine Pick-up (2) zum Aufnehmen von in Form eines Erntegutschwads (3) auf einem landwirtschaftlichen Feld (4) aufliegenden Ernteguts,
- weitere Arbeitsaggregate (5, 6, 7, 8) zum Bearbeiten und Weiterleiten des aufgenommenen Ernteguts,
- einem Antriebsmotor (9) zum Antrieb der Pick-up (2) sowie der weiteren Arbeitsaggregate (5, 6, 7, 8) und zum Vortrieb der Erntemaschine (1) mit einer wählbaren Fahrgeschwindigkeit auf dem landwirtschaftlichen Feld (4),
- einer Kameraeinrichtung (10) zur sukzessiven Erfassung digitaler Bilder des auf dem landwirtschaftlichen Feld (4) aufliegenden Erntegutschwads (3) an mindestens einer in Vorwärtsfahrtrichtung der Erntemaschine (1) vor der Erntemaschine (1) befindlichen Erfassungsstelle (11),
- eine Geschwindigkeitsregelanlage (12) zur Regelung der Fahrgeschwindigkeit der Erntemaschine (1) in Vorwärtsfahrrichtung,
- eine Sensoreinrichtung (13) zur sukzessiven Erfassung eines Massenstroms des Ernteguts, der von den Arbeitsaggregaten (5, 6, 7, 8) während des Erntebetriebs zu bearbeiten ist,
- eine Datenverarbeitungseinrichtung (14), die in Daten übertragender Weise mit der Kameraeinrichtung (10), mit der Sensoreinrichtung (13) und mit der Geschwindigkeitsregelanlage (12) verbunden ist,
**dadurch gekennzeichnet, dass**
die Datenverarbeitungseinrichtung (14) dazu vorgesehen und eingerichtet ist,
- die von der Kameraeinrichtung (10) erfassten digitalen Bilder zu empfangen und derart zu verarbeiten, dass an der Erfassungsstelle (11) ein Schwadquerschnitt des Erntegutschwads (3) bestimmt wird,
- von der Geschwindigkeitsregelanlage (12) die aktuelle Fahrgeschwindigkeit zu empfangen und aus dieser Fahrgeschwindigkeit und dem Schwadquerschnitt einen Volumenstrom des Ernteguts zu schätzen,
- basierend auf dem geschätzten Volumenstrom mittels Anwendung eines Umrechnungsfaktors einen Massenstrom des Ernteguts zu prognostizieren, der zeitversetzt nach der Erfassung des Schwadquerschnitts von den Arbeitsaggregaten (5, 6, 7, 8) zu bearbeiten ist,
- die Geschwindigkeitsregelanlage (12) dahingehend anzusteuern, dass die Fahrgeschwindigkeit in Abhängigkeit von dem prognostizierten Massenstrom verändert wird.

2. Selbstfahrende landwirtschaftliche Erntemaschine (1) nach Anspruch 1, **dadurch gekennzeichnet, dass** die Datenverarbeitungseinrichtung (14) dazu vorgesehen und eingerichtet ist, den Umrechnungsfaktor während des Erntebetriebs dynamisch anzupassen, vorzugsweise nach dem Prinzip einer Kennfeldadaption.

3. Selbstfahrende landwirtschaftliche Erntemaschine (1) nach Anspruch 2, **dadurch gekennzeichnet, dass** die Datenverarbeitungseinrichtung (14) dazu vorgesehen und eingerichtet ist, dass
i) quasistationäre Datenpunkte, vorzugsweise solche betreffend Erntegutparameter des Ernteguts, Maschinenparameter der Erntemaschine (1) und/oder Umweltparameter der Umwelt, ermittelt werden,
ii) nach Ermittlung einer hinreichenden Anzahl solcher Datenpunkte ein Offset der ermittelten Datenpunkte gegenüber einem Initialkennfeld ermittelt wird,
iii) das Initialkennfeld um den Offset korrigiert wird,
iv) die ermittelten Datenpunkte in das korrigierte Initialkennfeld einsortiert werden,
v) unter Berücksichtigung der einsortierten Datenpunkte ausgehend von dem korrigierten Initialkennfeld ein aktualisiertes Kennfeld berechnet wird, das das korrigierte Initialkennfeld ersetzt,
vi) der Umrechnungsfaktor anhand des aktualisierten Kennfelds ermittelt wird,
vii) die Schritte i) bis vi) in einer Schleife wiederholt werden, wobei das in Schritt v) berechnete aktualisierte Kennfeld bei Beginn der nachfolgenden Schleife als Initialkennfeld verwendet wird.

4. Selbstfahrende landwirtschaftliche Erntemaschine (1) nach Anspruch 3, **dadurch gekennzeichnet, dass** als quasistationäre Datenpunkte Werte des mittels der Sensoreinrichtung (13) erfassten Massenstroms im Verhältnis zu dem geschätzten Volumenstrom verwendet werden, wobei das Initialkennfeld den geschätzten Volumenstrom auf den prognostizierten Massenstrom abbildet und wobei der Offset sich aus der Abweichung des Verhältnisses zwischen dem erfassten Massenstrom und dem geschätzten Volumenstrom gegenüber dem Verhältnis zwischen dem prognostizierten Massenstrom und dem geschätzten Volumenstrom ergibt.

5. Selbstfahrende landwirtschaftliche Erntemaschine (1) nach einem der vorhergehenden Ansprüche, **dadurch gekennzeichnet, dass** die Datenverarbeitungseinrichtung (14) dazu vorgesehen und eingerichtet ist, zu prüfen, ob der prognostizierte Massenstrom betragsmäßig oberhalb eines vorgegebenen Schwellenwerts liegt, und für den Fall, dass er oberhalb des Schwellenwerts liegt, die Geschwindigkeitsregelanlage (12) dahingehend anzusteuern, dass die Fahrgeschwindigkeit reduziert wird, sodass die Arbeitsaggregate (5, 6, 7, 8) vor Überlastung geschützt sind.

6. Selbstfahrende landwirtschaftliche Erntemaschine (1) nach einem der vorhergehenden Ansprüche, **dadurch gekennzeichnet, dass** die Datenverarbeitungseinrichtung (14) dazu vorgesehen und eingerichtet ist, die Geschwindigkeitsregelanlage (12) dahingehend anzusteuern, dass die Fahrgeschwindigkeit verändert wird, um den prognostizierten Massenstrom, der mittels der Arbeitsaggregate (5, 6, 7, 8) zu bearbeiten ist, so zu beeinflussen, dass die Erntemaschine (1) möglichst auf einem vorgegebenen Betriebspunkt betrieben wird.

7. Selbstfahrende landwirtschaftliche Erntemaschine (1) nach einem der vorhergehenden Ansprüche, **dadurch gekennzeichnet, dass** die Sensoreinrichtung (13) dazu vorgesehen und eingerichtet ist, Informationen betreffend eine Auslenkung von Vorpresswalzen (17) eines ersten Arbeitsaggregats (5) der Erntemaschine (1) zu erfassen.

8. Verfahren zum Betrieb einer selbstfahrenden landwirtschaftlichen Erntemaschine (1), insbesondere eines selbstfahrenden Feldhäckslers, wobei vorzugsweise die Erntemaschine (1) gemäß einem der vorhergehenden Ansprüche ausgebildet ist, umfassend die folgenden Verfahrensschritte:
- Mittels einer Kameraeinrichtung (10) der Erntemaschine (1) werden sukzessive digitaler Bilder eines auf einem landwirtschaftlichen Feld (4) aufliegenden Erntegutschwads (3) an mindestens einer in Vorwärtsfahrtrichtung der Erntemaschine (1) vor der Erntemaschine (1) befindlichen Erfassungsstelle (11) erfasst;
- Mittels einer Geschwindigkeitsregelanlage (12) der Erntemaschine (1) wird die Fahrgeschwindigkeit der Erntemaschine (1) in Vorwärtsfahrrichtung während des Erntebetriebs geregelt;
- Mittels einer Sensoreinrichtung (13) der Erntemaschine (1) wird sukzessive ein Massenstrom von Erntegut, der von Arbeitsaggregaten (5, 6, 7, 8) der Erntemaschine (1) während des Erntebetriebs zu bearbeiten ist, erfasst;
- Mittels einer Datenverarbeitungseinrichtung (14) der Erntemaschine (1)
- werden die von der Kameraeinrichtung (10) erfassten digitalen Bilder empfangen und derart verarbeitet, dass an der Erfassungsstelle (11) ein Schwadquerschnitt des Erntegutschwads (3) bestimmt wird,
- wird von der Geschwindigkeitsregelanlage (12) die aktuelle Fahrgeschwindigkeit empfangen und aus dieser Fahrgeschwindigkeit und dem Schwadquerschnitt ein Volumenstrom des Ernteguts geschätzt,
- wird basierend auf dem geschätzten Volumenstrom mittels Anwendung eines Umrechnungsfaktors ein Massenstrom des Ernteguts prognostiziert, der zeitversetzt nach der Erfassung des Schwadquerschnitts von den Arbeitsaggregaten (5, 6, 7, 8) zu bearbeiten ist,
- wird die Geschwindigkeitsregelanlage (12) dahingehend angesteuert, dass die Fahrgeschwindigkeit in Abhängigkeit von dem prognostizierten Massenstrom verändert wird.

9. Verfahren nach Anspruch 8, **dadurch gekennzeichnet, dass** der Umrechnungsfaktor während des Erntebetriebs dynamisch angepasst wird, vorzugsweise nach dem Prinzip einer Kennfeldadaption.

10. Verfahren nach Anspruch 9, **dadurch gekennzeichnet, dass** zur dynamischen Anpassung des Umrechnungsfaktors während des Erntebetriebs
i) quasistationäre Datenpunkte, vorzugsweise solche betreffend Erntegutparameter des Ernteguts, Maschinenparameter der Erntemaschine (1) und/oder Umweltparameter der Umwelt, ermittelt werden,
ii) nach Ermittlung einer hinreichenden Anzahl solcher Datenpunkte ein Offset der ermittelten Datenpunkte gegenüber einem Initialkennfeld ermittelt wird,
iii) das Initialkennfeld um den Offset korrigiert wird,
iv) die ermittelten Datenpunkte in das korrigierte Initialkennfeld einsortiert werden,
v) unter Berücksichtigung der einsortierten Datenpunkte ausgehend von dem korrigierten Initialkennfeld ein aktualisiertes Kennfeld berechnet wird, das das korrigierte Initialkennfeld ersetzt,
vi) der Umrechnungsfaktor anhand des aktualisierten Kennfelds ermittelt wird,
vii) die Schritte i) bis vi) in einer Schleife wiederholt werden, wobei das in Schritt v) berechnete aktualisierte Kennfeld bei Beginn der nachfolgenden Schleife als Initialkennfeld verwendet wird.

11. Verfahren nach Anspruch 10, **dadurch gekennzeichnet, dass** als quasistationäre Datenpunkte Werte des mittels der Sensoreinrichtung (13) erfassten Massenstroms verwendet werden, wobei das Initialkennfeld den geschätzten Volumenstrom auf den prognostizierten Massenstrom abbildet und wobei der Offset sich aus der Abweichung des erfassten Massenstroms von dem prognostizierten Massenstrom ergibt.

12. Verfahren nach einem der Ansprüche 8 bis 11, **dadurch gekennzeichnet, dass** geprüft wird, ob der prognostizierte Massenstrom betragsmäßig oberhalb eines vorgegebenen Schwellenwerts liegt, und für den Fall, dass er oberhalb des Schwellenwerts liegt, die Fahrgeschwindigkeit reduziert wird, sodass die Arbeitsaggregate (5, 6, 7, 8) vor Überlastung geschützt sind.

13. Verfahren nach einem der Ansprüche 8 bis 12, **dadurch gekennzeichnet, dass** die Fahrgeschwindigkeit verändert wird, um den prognostizierten Massenstrom, der mittels der Arbeitsaggregate (5, 6, 7, 8) zu bearbeiten ist, so zu beeinflussen, dass die Erntemaschine (1) möglichst auf einem vorgegebenen Betriebspunkt betrieben wird.
